# EUROPÄISCHE PATENTSCHRIFT

(11) **EP 1 986 792 B1**
(45) Veröffentlichungstag und Bekanntmachung des Hinweises auf die Patenterteilung: **18.11.2009**
(21) Anmeldenummer: 06849416.0
(22) Anmeldetag: 28.12.2006
(51) Int. Cl.: B05D 5/08, C23C 28/00

(54) **VERFAHREN ZUR BESCHICHTUNG VON SUBSTRATEN UND TRÄGERSUBSTRATEN**
METHOD FOR COATING SUBSTRATES AND CARRIER SUBSTRATES
PROCEDE D'ENDUCTION DE SUBSTRATS ET SUBSTRATS PORTEURS

(30) Priorität: 20.02.2006 DE 102006008130
(43) Veröffentlichungstag der Anmeldung: 05.11.2008
(73) Patentinhaber: Evonik Degussa GmbH, 45128 Essen (DE)
(72) Erfinder: NUN, Edwin, 48727 Billerbeck (DE); VETTER, Michael, 59348 Lüdinghausen (DE); WILLE, Martin, 44795 Bochum (DE)
(86) Internationale Anmeldenummer: PCT/EP2006/070249
(87) Internationale Veröffentlichungsnummer: WO 2007/096020

(56) Entgegenhaltungen:
- WO-A-99/15262
- DE-A1- 10 343 308
- DE-A1- 19 952 040

## Beschreibung

Die vorliegende Erfindung betrifft ein Verfahren zur Beschichtung von Substraten, sowie beschichtete Substrate, erhältlich mit dem vorgenannten Verfahren.

Es besteht im Stand der Technik der Bedarf, die Oberflächeneigenschaften von Substraten durch Beschichtung zu verändern bzw. zu verbessern. Insbesondere können durch Beschichtungen die Härte oder die Resistenz gegenüber aggressiven Substanzen verbessert werden. Die Substrate, die beschichtet werden, können sehr unterschiedliche Eigenschaften haben. Im Bereich der Baumaterialien sind die unterschiedlichsten Substrate bekannt. Als Substrate kommen harte, also nicht flexible Substrate in Betracht, wie z.B. Steine oder nicht flexible Fliesen. Diese werden an den unterschiedlichsten Stellen, z.B. eines Hauses, verbaut. Es gibt allerdings auch einen sehr großen Anwendungsbereich von flexiblen Baumaterialien. Hier sind insbesondere flexible Fliesen zu nennen, die z.B. als wasserdichte Auskleidung von Schwimmbecken verwendet werden können. Die flexiblen Baumaterialien haben den Vorteil, dass sie sich der Untergrundoberfläche anpassen können, ohne dass ein aufwändiges Anpassen des Substrates notwendig ist. Außerdem können mit flexiblen Baumaterialien Formen realisiert werden, die mit starren Baumaterialien gar nicht oder nur schwer erzielbar sind.

Außerdem besteht ein wachsender Bedarf an beschichteten Furnieren wie z.B. Bodenpaneelen oder Möbeln, die mit einer resistenten und kratzfesten Oberfläche ausgerüstet sind. Insbesondere bei hochwertigen Furnieren werden die Anforderungen an die Oberflächeneigenschaften immer höher.

Allen diesen Substraten ist gemein, dass sie eine Oberfläche aufweisen müssen, die den unterschiedlichsten Anforderungen gerecht werden muss. Eine Anforderung besteht darin, dass sie resistent gegenüber aggressiven Chemikalien oder Umwelteinflüssen sein müssen. Andererseits ist es in anderen Bereichen vorteilhaft, wenn die Baumaterialien eine geringe Verschmutzungsneigung aufweisen.

Andererseits gibt es auch auf anderen Gebieten, wie z.B. der Gewebe und Gewirke die Möglichkeit Oberflächeneigenschaften durch Beschichtungen zu verbessern. Hierbei wird die Stabilität eines Verbundes durch das zugrundeliegende Substrat gewährleistet, während die Resistenz gegenüber aggressiven Substanzen oder aber die Verschmutzungsneigung durch aufgebrachte Beschichtungen gewährleistet wird.

Bei flexiblen Substraten ist es insbesondere notwendig, dass aufgebrachte Beschichtungen so flexibel sind, dass sie ohne Beeinträchtigung ihrer Struktur jeder Verformung des flexiblen Substrates folgen. Wenn nun ein flexibles Substrat gebogen wird, treten an der Oberfläche des Substrates Spannungen auf. Diese Spannungen dürfen allerdings nicht dazu führen, dass die Beschichtung eines Substrates beeinträchtigt wird, wie z.B. durch Rissbildung. Insbesondere bei einem flexiblen Substrat, das als Kantenschutz dient darf auch bei einem großen Knickwinkel ein aufgebrachte Beschichtung nicht reissen.

So sind im Stand der Technik Verfahren bekannt, Beschichtungen auf flexiblen Substraten aufzubringen, ohne dass die Beschichtung durch Verformung des Substrates nachteilig beeinflusst wird.

Aus der WO 99/15262 ist ein stoffdurchlässiger Verbundwerkstoff bekannt. Hierbei wird auf einem stoffdurchlässigen Träger eine Beschichtung aufgebracht, die nachfolgend ausgehärtet wird. Die Beschichtung enthält eine anorganische Komponente, wobei die anorganische Komponente zumindest eine Verbindung aus einem Metall, Halbmetall oder Mischmetall mit zumindest einem Element der dritten bis siebten Hauptgruppe des Periodensystems aufweist. Die Beschichtungszusammensetzung kann durch Hydrolyse einer Vorstufe erhalten werden. Hierbei kann sich ein Sol bilden, welches nachfolgend auf das stoffdurchlässige Substrat aufgebracht wird. Die in der WO 99/15262 offenbarten stoffdurchlässigen Verbundwerkstoffe zeichnen sich dadurch aus, dass auch bei sehr geringen Krümmungsradien des Verbundwerkstoffes keine Beeinträchtigung der aufgebrachten Beschichtung auftritt.

Es besteht allerdings ein weiterer Bedarf, die Oberflächeneigenschaften solcher flexiblen Substrate zu beeinflussen. Eine solche Beeinflussung von Substraten kann z.B. durch Beschichtungen erfolgen, die nach dem Sol-Gel-Verfahren aufgebracht werden. Bei den im Stand der Technik offenbarten Sol-Gel-Beschichtungen zeigt sich allerdings das Problem, dass sie nur in relativ dünnen Schichtdicken aufgebracht werden können. Außerdem sind die Sol-Gel-Beschichtungen des Standes der Technik nicht geeignet, auf flexible Substrate aufgebracht zu werden, da sie bei einer mechanischen Verformung des Substrates Risse bilden. Durch diese Rissbildung wird nicht mehr gewährleistet, dass das Substrat durch die Beschichtung vollständig geschützt wird. Vielmehr können aggressive Substanzen durch die entstandenen Risse zum Substrat gelangen und dieses negativ beeinflussen.

Insbesondere ist es mit den Verfahren des Standes der Technik nicht möglich Sol-Gel-Beschichtungen mit einer großen Schichtdicke auf flexible Substrate aufzubringen.

Die technische Aufgabe, die der vorliegenden Erfindung zugrunde liegt, ist die Zurverfügungstellung von beschichteten Substraten, die eine Beschichtung aufweisen, die das Substrat vor Umwelteinflüssen sicher schützt, wobei das Substrat auch flexibel sein kann und die Beschichtung durch eine Verformung des Substrates nicht nachteilig beeinflusst wird. Insbesondere sollen Klebstoffe, die zur Befestigung des Substrates dienen die Eigenschaften und insbesondere die Oberflächeneigenschaften des beschichteten Substrates nicht nachteilig beeinflussen. Eine weitere Aufgabe der vorliegenden Erfindung ist die Zurverfügungstellung eines Verfahrens zur Bereitstellung solcher verbesserter Substrate.

Die technische Aufgabe der vorliegenden Erfindung wird durch ein Verfahren zur Beschichtung von Substraten gelöst, umfassend die Schritte:
a) Bereitstellung eines Substrates,
b) Aufbringung einer Zusammensetzung auf einer ersten Seite des Substrates, wobei die Zusammensetzung eine anorganische Verbindung enthält und die anorganische Verbindung mindestens ein Metall und/oder Halbmetall ausgewählt aus der Gruppe Sc, Y, Ti, Zr, Nb, V, Cr, Mo, W, Mn, Fe, Co, B, Al, In, Tl, Si, Ge, Sn, Zn, Pb, Sb, Bi oder Mischungen derselben und mindestens ein Element ausgewählt aus der Gruppe Te, Se, S, O, Sb, As, P, N, C, Ga oder Mischungen derselben enthält,
c) Trocknen der in Schritt b) aufgebrachten Zusammensetzung,
d) Aufbringung mindestens einer Beschichtung auf der ersten Seite des Substrates, auf der in Schritt b) die Zusammensetzung aufgebracht wurde, wobei die Beschichtung
   ein Silan der allgemeinen Formel (Z¹)Si(OR)₃, wobei Z¹ R, OR oder Gly (Gly=3-Glycidyloxypropyl) ist und R ein Alkylrest mit 1 bis 18 Kohlenstoffatomen ist und alle R gleich oder unterschiedlich sein können, Oxidpartikel, ausgewählt aus den Oxiden von Ti, Si, Zr, Al, Y, Sn, Zn, Ce oder Mischungen derselben, ein Polymer und einen Initiator enthält, und
e) Trocknen der in Schritt d) aufgebrachten Beschichtung.
f) Aufbringen mindestens einer Barriereschicht auf einer zweiten Seite des Substrates, und
g) Optionales Aufbringen mindestens einer Schicht enthaltend mindestens einen Klebstoff (Klebstoffschicht) auf der in Schritt f) aufgebrachten Barriereschicht

Die erste Seite des beschichteten Substrates ist die Seite, die nach bestimmungsgemäßer Verwendung sichtbar ist. Dementsprechend ist die zweite Seite des beschichteten Substrates die Seite, mit der das beschichtete Substrat bei bestimmungsgemäßer Verwendung auf einen Untergrund aufgebracht wird. Vorzugsweise ist die zweite Seite des Substrates die Rückseite der ersten Seite des Substrates.

Das Verfahren der vorliegenden Erfindung ist auf keine spezifischen Substrate limitiert. Die Substrate können sowohl offenporig als auch geschlossenporig sein. Insbesondere kann das Substrat in Schritt a) ein flexibles und/oder starres Substrat sein. In einer bevorzugten Ausführungsform ist das Substrat des Schrittes a) ein Gewirke, ein Gewebe, ein Geflecht, eine Folie, ein Flächengebilde und/oder ein Blech.

Das Substrat in Schritt a) ist vorzugsweise bei einer Temperatur größer als 100 °C im Wesentlichen temperaturstabil. Vorzugsweise ist das Substrat in Schritt a) unter den Trocknungsbedingungen der Schritte c) und/oder e) im Wesentlichen temperaturstabil.

In einer bevorzugten Ausführungsform wird die anorganische Verbindung des Schrittes b) ausgewählt aus TiO₂, Al₂O₃, SiO₂, ZrO₂, Y₂O₃, BC, SiC, Fe₂O₃, SiN, SiP, Alumosilicaten, Aluminiumphosphaten, Zeolithen, partiell ausgetauschten Zeolithen oder Mischungen derselben. Bevorzugte Zeolithe sind z.B. ZSM-5, Na-ZSM-5 oder Fe-ZSM-5 oder amorphe mikroporöse Mischoxide, die bis zu 20 Prozent nicht hydrolysierbare organische Verbindungen enthalten können, wie z.B. Vanadinoxid-Siliciumoxid-Glas oder Aluminiumoxid-Siliciumoxid-Methylsiliciumsesquioxid-Gläser.

Vorzugsweise weist die anorganische Verbindung des Schrittes b) eine Korngröße von 1 nm bis 10.000 nm auf. Es kann vorteilhaft sein, wenn der erfindungsgemäße Verbundwerkstoff zumindest zwei Korngrößenfraktionen der zumindest einen anorganischen Verbindung aufweist. Ebenso kann es vorteilhaft sein, wenn das erfindungsgemäß Substrat zumindest zwei Korngrößenfraktionen von zumindest zwei anorganischen Verbindungen aufweist. Das Korngrößenverhältnis kann von 1:1 bis 1:10.000, vorzugsweise von 1:1 bis 1:100 betragen. Das Mengenverhältnis der Korngrößenfraktionen in der Zusammensetzung des Schrittes b) kann vorzugsweise von 0,01:1 bis 1:0,01 betragen. Die Zusammensetzung des Schrittes b) ist vorzugsweise eine Suspension, die vorzugsweise eine wässrige Suspension ist. Die Suspension kann vorzugsweise eine Flüssigkeit, ausgewählt aus Wasser, Alkohol, Säure oder eine Mischung derselben aufweisen.

In einer weiter bevorzugten Ausführungsform kann die anorganische Verbindung des Schrittes b) durch Hydrolysieren einer Vorstufe der anorganischen Verbindung, enthaltend das Metall und/oder Halbmetall, erhalten werden. Das Hydrolysieren kann z.B. durch Wasser und/oder Alkohol erfolgen. Bei der Hydrolyse kann ein Initiator vorhanden sein, der vorzugsweise eine Säure oder Base ist, welche vorzugsweise eine wässrige Säure oder Base ist.

Die Vorstufe der anorganischen Verbindung ist vorzugsweise ausgewählt aus Metallnitrat, Metallhalogenid, Metallcarbonat, Metallalkoholat, Halbmetallhalogenid, Halbmetallalkoholat oder Mischung derselben. Bevorzugte Vorstufen sind z.B. Titanalkoholate, wie z.B. Titanisopropylat, Siliciumalkoholate, wie z.B. Tetraethoxysilan, Zirkoniumalkoholate. Bevorzugte Metallnitrate sind z.B. Zirkoniumnitrat. In einer vorteilhaften Ausführungsform ist in der Zusammensetzung in Bezug auf die hydrolysierbare Vorstufe, bezogen auf die hydrolysierbare Gruppe der Vorstufe, zumindest das halbe Molverhältnis Wasser, Wasserdampf oder Eis, enthalten.

In einer bevorzugten Ausführungsform ist die Zusammensetzung des Schrittes b) ein Sol. In einer bevorzugten Ausführungsform ist es möglich handelsübliche Sole, wie z.B. Titannitratsol, Zirkonnitratsol oder Silicasol, zu verwenden.

Vorzugsweise wird das Trocknen der Zusammensetzung in Schritt c) durch Erwärmen auf eine Temperatur zwischen 50 °C und 1.000 °C durchgeführt. In einer bevorzugten Ausführungsform wird für 10 Minuten bis 5 Stunden bei einer Temperatur von 50 °C bis 100 °C getrocknet.

In einer anderen bevorzugten Ausführungsform wird in Schritt d) für 1 Sekunde bis 10 Minuten bei einer Temperatur von 100 °C bis 800 °C getrocknet.

Das Trocknen des Schrittes c) kann mittels erwärmter Luft, Heißluft, Infrarotstrahlung, Mikrowellenstrahlung oder elektrisch erzeugter Wärme erfolgen.

In einer bevorzugten Ausführungsform ist R in der allgemeinen Formel (Z¹)Si(OR)₃ ein Alkylrest mit 1, 2, 3, 4, 5, 6, 7, 8, 9, 10, 11, 12, 13, 14, 15, 16, 17 und/oder 18 Kohlenstoffatomen.

In einer bevorzugten Ausführungsform enthält die Beschichtung des Schrittes d) ein zweites Silan der allgemeinen Formel (Z²)_{z}Si(OR)_{4-z}, wobei R ein Alkylrest mit 1 bis 6 Kohlenstoffatomen ist und Z² HₐF_{b}Cₙ, ist, wobei a und b ganze Zahlen sind, alle R gleich oder unterschiedlich sein können, a+b=1+2n ist, z = 1 oder 2 ist und n 1 bis 16 ist, oder für den Fall, dass Z¹ Gly ist, Z² Am (Am=3-Aminopropyl) mit z = 1 ist. Vorzugsweise ist n 1, 2, 3, 4, 5, 6, 7, 8, 9, 10, 11, 12, 13, 14, 15 und/oder 16. In einer bevorzugten Ausführungsform ist R in der allgemeinen Formel (Z²)Si(OR)₃ ein Alkylrest mit 1, 2, 3, 4, 5, 6, 7, 8, 9, 10, 11, 12, 13, 14, 15 und/oder 16 Kohlenstoffatomen.

In einer weiter bevorzugten Ausführungsform enthält die Beschichtung des Schrittes d) 3-Glycidyloxypropyltriethoxysilan und/oder 3-Glycidyloxypropyltrimethoxysilan als Silan und/oder 3-Aminopropyltrimethoxysilan und/oder 3-Aminopropyltriethoxysilan als zweites Silan. Vorzugsweise enthält die Beschichtung des Schrittes d) als Silan Tetraethoxysilan und als zweites Silan ein Silan der Formel (HₐF_{b}Cₙ)_{z}Si(OR)_{4-z}, wobei a und b ganze Zahlen sind, a+b = 1+2n ist, z 1 oder 2 ist, n 1 bis 16 ist und alle R gleich oder unterschiedlich sein können, wobei vorzugsweise alle R gleich sind und 1 bis 6 Kohlenstoffatome enthalten.

Weiter bevorzugt sind in der Beschichtung des Schrittes d) Tetraethoxysilan, Methyltriethoxysilan, Octyltriethoxysilan und/oder Hexadecyltrimethoxysilan als Silan und/oder 3,3,4,4,5,5,6,6,7,7,8,8,8-Tridecafluoroctyltriethoxysilan als zweites Silan enthalten.

In einer bevorzugten Ausführungsform ist in der Beschichtung des Schrittes d) als Initiator eine Säure oder Base enthalten, welche vorzugsweise eine wässrige Säure oder Base ist.

Vorzugsweise ist die Oberfläche der Oxidpartikel, enthalten in der Beschichtung des Schrittes d) hydrophob. An der Oberfläche der Oxidpartikel der Beschichtung des Schrittes d) sind vorzugsweise an Siliciumatome gebundene organische Reste X₁₊₂ₙCₙ vorhanden, wobei n 1 bis 20 ist und X Wasserstoff und/oder Fluor ist. Die organischen Reste können gleich oder unterschiedlich sein. Vorzugsweise ist n 1, 2, 3, 4, 5, 6, 7, 8, 9, 10, 11, 12, 13, 14, 15, 16, 17, 18, 19 und/oder 20. Vorzugsweise sind die an Siliziumatome gebundenen Gruppen Methyl-, Ethyl-, Propyl-, Butyl- und/oder Pentylgruppen. In einer besonders bevorzugten Ausführungsform sind Trimethylsilylgruppen an die Oberfläche der Oxidpartikel gebunden. Die organischen Reste können vorzugsweise abgespalten werden und weiter bevorzugt hydrolysiert werden.

Die Oxidpartikel der Beschichtung des Schrittes d) können ausgewählt sein aus den Oxiden von Ti, Si, Zr, Al, Y, Sn, Zn, Ce oder Mischungen derselben enthalten. Vorzugsweise werden die Oxidpartikel der Beschichtung des Schrittes d) unter den Reaktionsbedingungen des Schrittes d) an der Oberfläche der Oxidpartikel teilweise hydrolysiert. Hierbei bilden sich vorzugsweise reaktive Zentren, die mit den organischen Siliciumverbindungen der Beschichtung des Schrittes d) reagieren. Diese organischen Siliciumverbindungen können während der Trocknung des Schrittes e) kovalent an die Oxidpartikel durch z.B. -0-Bindungen gebunden werden. Es werden hierdurch die Oxidpartikel mit der aushärtenden Beschictung kovalent vernetzt. Deshalb kann die Schichtdicke der aushärtenden Beschichtung überraschenderweise weiter gesteigert werden.

Die Oxidpartikel können eine mittlere Partikelgröße von 10 bis 1.000 nm, vorzugsweise von 20 bis 500 nm, weiter bevorzugt von 30 bis 250 nm aufweisen. Falls die Beschichtung transparent und/oder farblos sein soll, so werden vorzugsweise nur Oxidpartikel verwendet, die eine mittlere Partikelgröße von 10 bis 250 nm aufweisen. Die mittlere Partikelgröße bezieht sich auf die Partikelgröße der Primärpartikel oder, falls die Oxide als Agglomerate vorliegen, auf die Größe der Agglomerate. Die Partikelgröße wird durch lichtstreuende Methoden bestimmt, beispielsweise durch ein Gerät des Typs HORIBA LB 550^{®} (der Firma Retsch Technology)

In der Beschichtung des Schrittes d) hat das Polymer vorzugsweise ein mittleres massenmittleres Molekulargewicht von mindestens 3000 g/mol. Vorzugsweise ist das mittlere massenmittlere Molekulargewicht mindestens 5000 g/mol, weiter bevorzugt mindestens 6000 g/mol und am meisten bevorzugt mindestens 10000 g/mol.

Vorzugsweise hat das Polymer der Beschichtung des Schrittes d) einen mittleren Polymerisationsgrad von mindestens 50. In einer weiter bevorzugten Ausführungsform ist der mittlere Polymerisationsgrad mindestens 80 , weiter bevorzugt mindestens 95 und am meisten bevorzugt mindestens 150. Vorzugsweise wird das Polymer der Beschichtung des Schrittes d) ausgewählt aus Polyamid, Polyester, Epoxidharzen, Melamin-Formaldehyd-Kondensat, Urethan-Polyol-Harz oder Mischungen derselben.

Vorzugsweise wird in Schritt d) auf das Substrat soviel der Beschichtung aufgebracht, dass nach Trocknung in Schritt e) auf dem Substrat eine Schicht der getrockneten Beschichtung mit einer Schichtdicke von 0,05 bis 10 µm vorhanden ist. Vorzugsweise ist auf dem getrockneten Substrat eine Beschichtung des Schrittes d) mit einer Schichtdicke von 0,1 µm bis 9 µm, weiter bevorzugt von 0,2 µm bis 8 µm und am meisten bevorzugt von 0,3 µm bis 7 µm vorhanden.

Das Trocknen der Beschichtung in Schritt e) kann durch jedes Verfahren durchgeführt werden, das dem Fachmann bekannt ist. Insbesondere kann die Trocknung in einem Ofen durchgeführt werden. Weiter bevorzugt ist die Trocknung mit einem Heißluftofen, Umluftofen, Mikrowellenofen oder durch Infrarotbestrahlung. Insbesondere kann vorzugsweise die Trocknung mit den Verfahren und den Trocknungszeiten des Schrittes c) durchgeführt werden. In einer bevorzugten Ausführungsform wird die Beschichtung des Schrittes e) durch Erwärmen auf eine Temperatur zwischen 50 °C und 1.000 °C getrocknet.

In einer weiter bevorzugten Ausführungsform kann vor dem Aufbringen der Beschichtung in Schritt b) und/oder d) mindestens eine weitere Beschichtung aufgebracht werden. Diese weitere Beschichtung kann z.B. ein Druck sein. Ein solcher Druck kann mit jedem Druckverfahren aufgebracht werden, das dem Fachmann geläufig ist, insbesondere dem Offset-Druckverfahren, Flexo-Druckverfahren, Tampondruck oder Inkjet-Druckverfahren.

In einer weiteren Ausführungsform kann nach dem Aufbringen der Beschichtung in Schritt d) mindestens eine weitere Beschichtung aufgebracht werden. Diese weitere Beschichtung ist nicht begrenzt und kann jede Beschichtung sein, die dem Fachmann bekannt ist. Insbesondere kann diese Beschichtung auch ein Druck sein. Auch in diesem Fall kann der Druck mit jedem Verfahren, das dem Fachmann geläufig ist, aufgebracht werden, insbesondere dem Offset-Druckverfahren, Flexo-Druckverfahren, Tampondruck und Inkjet-Druckverfahren.

Vorzugsweise weist die Barriereschicht in Schritt f) nach Trocknung im wesentlichen keine Poren auf und weiter bevorzugt keine Poren auf. Unter dem Begriff Poren werden in diesem Zusammenhang Öffnungen (Pinholes) in der Barriereschicht verstanden. Barriereschichten weisen üblicherweise im wesentlichen keine Poren auf.

Die Barriereschicht in Schritt f) enthält vorzugsweise filmbildende Polymere, die vorzugsweise ausgewählt sind aus Kunstharzdispersionen, Kunstharzemulsionen, Polyvinylalkohol, modifiziertem Polyvinylalkohol, Polyvinylacetat, modifiziertem Polyvinylacetat, Polymaleinsäureanhydrid, Polyvinylmethylether, Vinylmethylether-Maleinsäureanhydrid-Copolymerisat, Polyvinylbutylether, Vinylbutylether-Styrol Copolymerisat, Polyurethan, Melaminformaldehydkondensat, Harnstoffmelaminkondensat oder Mischungen derselben. Die filmbildenden Polymere können vorzugsweise als Lösung, Emulsion und/oder Dispersion aufgetragen werden.

Die rückseitig aufgebrachte Barriereschicht soll verhindern, dass auf der Barriereschicht aufgebrachte Substanzen in das Substrat und/oder die hierauf aufgebrachten Schichten penetrieren können. Somit kann durch die Barriereschicht das beschichtete Substrat mit den unterschiedlichsten Techniken oder Substanzen auf den unterschiedlichsten Untergründe befestigt werden. Vorzugsweise erfolgt diese Befestigung durch Aufkleben mit geeigneten Klebstoffen. Weiter bevorzugt können alle Klebstoffe verwendet werden, die weiter unten für die optionale Klebstoffschicht angegeben sind.

Die Barriereschicht kann vorzugsweise aus einer flüssigen Beschichtungsmasse aufgebracht werden. Es ist weiter bevorzugt, dass die aufgebrachte Beschichtungsmasse, aus der die Barriereschicht aufgebracht wird nach Aufbringung getrocknet wird.

Vorzugsweise können eine oder mehrere Barriereschichten aufgetragen werden.

Die Barriereschicht weist vorzugsweise eine Schichtdicke im getrockneten Zustand von 1 bis 100 µm, weiter bevorzugt von 2 bis 80 µm und am meisten bevorzugt von 3 bis 70 µm auf. Weiter bevorzugt weist die Barriereschicht eine Schichtdicke im getrockneten Zustand von 4 bis 60 µm, weiter bevorzugt von 5 bis 50 µm und am meisten bevorzugt von 6 bis 20 µm auf.

Vorzugsweise enthält die in Schritt g) optional aufgebrachte Klebstoffschicht einen Klebstoff ausgewählt aus der Gruppe enthaltend Dispersionsklebstoffe, Lösungsmittelklebstoffe, Stärkekleister, Kunstharzleime, Kaltleime, Heißsiegelklebstoffe, Schmelzklebstoffe, Montageleime, Tapetenkleister, physikalisch abbindende Klebstoffe, chemisch abbindende Klebstoffe, Einkomponentenktebstoffe, Mehrkomponentenklebstoffe, Zweikomponentenklebstoffe, Aminoplastklebstoffe, Phenoplastklebstoffe, Kontaktklebstoffe, Haftklebstoffe, Reaktionsklebstoffe, Plastisolklebstoffe, Leime, Harnstoffharzleime oder Mischungen derselben.

Die optionale Klebstoffschicht (Schritt g)) kann vorzugsweise aus einer flüssigen Beschichtungsmasse aufgebracht werden. Es ist weiter bevorzugt, dass die aufgebrachte Klebstoffmasse, aus der die Klebstoffschicht aufgebracht wird nach Aufbringung getrocknet wird. Die Klebstoffe können vorzugsweise als Lösung, Emulsion und/oder Dispersion aufgetragen werden. Alternativ ist die Aufbringung der Klebstoffe aus einer Schmelze möglich.

Die optionale Klebstoffschicht (Schritt g)) weist vorzugsweise eine Schichtdicke im getrockneten Zustand von 1 bis 100 µm, weiter bevorzugt von 2 bis 80 µm und am meisten bevorzugt von 3 bis 70 µm auf. Weiter bevorzugt weist die optionale Klebstoffschicht eine Schichtdicke im getrockneten Zustand von 4 bis 60 µm, weiter bevorzugt von 5 bis 50 µm und am meisten bevorzugt von 6 bis 20 µm auf.

Vorzugsweise können eine oder mehrere optionale Klebstoffschichten aufgetragen werden.

Ein weiterer Gegenstand der vorliegenden Erfindung ist das beschichtete Substrat, welches mit dem vorgenannten Verfahren erhältlich ist.

Ein weiterer Gegenstand der vorliegenden Erfindung ist ein Verfahren zur Aufbringung des vorgenannten beschichteten Substrates auf ein Trägersubstrat umfassend die Schritte:
a) Bereitstellung eines Trägersubstrates
b) Optionales Aufbringen mindestens einer Schicht enthaltend mindestens einen Klebstoff (Klebstoffschicht) auf mindestens einer Seite des Trägersubstrates, und
c) Aufkleben des beschichteten Substrates auf das Trägersubstrat, wobei die zweite Seite des beschichteten Substrates in Richtung des Trägersubstrates weist und/oder in Richtung der optional aufgebrachten Klebstoffschicht des Trägersubstrates weist.

Falls in Schritt b) auf mehr als einer Seite des Trägersubstrates eine Klebstoffschicht aufgebracht wurde, so ist es ausreichend, wenn das beschichtete Substrat nur auf mindestens einer Seite des Trägersubstrates aufgebracht wird. Die erste Seite des beschichteten Substrates ist nach Aufbringung auf das Trägersubstrat nach bestimmungsgemäßer Verwendung des Trägersubstrates sichtbar.

Falls das beschichtete Substrat als Kantenschutz dienen soll, wird vorzugsweise in Schritt b) auf mindestens zwei benachbarten Seiten des Trägersubstrates eine Klebstoffschicht aufgebracht.

Vorzugsweise ist das Trägersubstrat in Schritt a) ein flexibles oder starres Substrat, welches vorzugsweise ausgewählt ist aus einer Spanplatte, Rohspanplatte, Holzplatte, Kunststoffplatte, Parkettboden, Holzfurnier, Furnier oder Kombinationen hiervon.

Falls das beschichtete Substrat eine Klebstoffschicht aufweist, so wird vorzugsweise auf dem Trägersubstrat in Schritt b) keine Klebstoffschicht aufgebracht. Alternativ, falls das beschichtete Substrat keine Klebstoffschicht aufweist, so wird vorzugsweise auf dem Trägersubstrat in Schritt b) eine Klebstoffschicht aufgebracht. Es ist allerdings auch möglich, dass weder das beschichtete Substrat noch das auf das Trägersubstrat eine Klebstoffschicht aufgebracht ist. In diesem Fall erfolgt das Aufkleben des beschichteten Substrates auf das Trägersubstrat in Schritt c) vorzugsweise durch Einwirkung von erhöhtem Druck und/oder erhöhter Temperatur und hierbei wird das beschichtete Substrat vorzugsweise mit dem Trägersubstrat verklebt.

Vorzugsweise enthält die optionale Klebstoffschicht des Schrittes b) einen Klebstoff ausgewählt aus der Gruppe enthaltend Dispersionsklebstoffe, Lösungsmittelklebstoffe, Stärkekleister, Kunstharzleime, Kaltleime, Heißsiegelklebstoffe, Schmelzklebstoffe, Montageleime, Tapetenkleister, physikalisch abbindende Klebstoffe, chemisch abbindende Klebstoffe, Einkomponentenklebstoffe, Mehrkomponentenklebstoffe, Zweikomponentenktebstoffe, Aminoplastklebstoffe, Phenoplastklebstoffe, Kontaktklebstoffe, Haftklebstoffe, Reaktionsklebstoffe, Plastisolklebstoffe, Leime, Harnstoffharzleime oder Mischungen derselben.

Die optionale Klebstoffschicht (Schritt b)) kann vorzugsweise aus einer flüssigen Beschichtungsmasse aufgebracht werden Es ist weiter bevorzugt, dass die aufgebrachte Klebstoffmasse, aus der die Klebstoffschicht aufgebracht wird nach Aufbringung getrocknet wird. Die Klebstoffe können vorzugsweise als Lösung, Emulsion und/oder Dispersion aufgetragen werden. Alternativ ist die Aufbringung der Klebstoffe aus einer Schmelze möglich.

Die optionale Klebstoffschicht (Schritt b)) weist vorzugsweise eine Schichtdicke im getrockneten Zustand von 1 bis 100 µm, weiter bevorzugt von 2 bis 80 µm und am meisten bevorzugt von 3 bis 70 µm auf. Weiter bevorzugt weist die optionale Klebstoffschicht eine Schichtdicke im getrockneten Zustand von 4 bis 60 µm, weiter bevorzugt von 5 bis 50 µm und am meisten bevorzugt von 6 bis 20 µm auf.

Vorzugsweise können eine oder mehrere optionale Klebstoffschichten aufgetragen werden. Das Aufkleben des beschichteten Substrates auf das Trägersubstrat in Schritt c) erfolgt vorzugsweise unter Anwendung von erhöhtem Druck und/oder erhöhter Temperatur. Vorzugsweise erfolgt das Aufkleben durch Anpressen.

Vorzugsweise beträgt der Druck während des Aufklebens in Schritt c) 1 bis 100 N/m², weiter bevorzugt 2 bis 75 N/m²und am meisten bevorzugt 3 bis 50 N/m². Weiter bevorzugt beträgt der Druck während des Aufklebens in Schritt c) 4 bis 30 N/m² , weiter bevorzugt 5 bis 25 N/m²und am meisten bevorzugt 6 bis 20 N/m².

Vorzugsweise beträgt die Temperatur während des Aufklebens in Schritt c) 30 bis 300 °C, weiter bevorzugt 40 bis 250 °C und am meisten bevorzugt 50 bis 220 °C.

Die Dauer, mit der das beschichtete Substrat auf das Trägersubstrat gepresst wird beträgt vorzugsweise 1 Sekunde bis 60 Minuten, weiter bevorzugt 30 Sekunden 50 Minuten und am meisten bevorzugt 1 Minute bis 40 Minuten.

Sowohl der Druck während des Aufklebens, die Temperatur als auch die Dauer des Anpressens können je nach eingesetztem Klebstoff variieren.
Das beschichtete Substrat und das Trägersubstrat sind vorzugsweise unter den Klebebedingungen des Schrittes c) im Wesentlichen temperaturstabil und weiter bevorzugt temperaturstabil.

Das beschichtete Trägersubstrat ist vorzugsweise ein Fußbodenpaneel und/oder Furnier. Es ist auch möglich das beschichtete Substrat als Kantenschutz auf einem Trägersubstrat aufzubringen. Mit einem erfindungsgemäßen Furnier versehene Gegenstände können auch Möbel, Möbelbestandteile, Türen und/oder Fenster sein.

Beschichtete Substrate und beschichtete Trägersubstrate der vorliegenden Erfindung zeigen überraschenderweise eine sehr hohe Flexibilität. Falls das Substrat flexibel ist, so kann das Substrat gebogen werden, ohne dass die aufgebrachten Beschichtungen zerstört werden oder einreißen. Insbesondere können somit Beschichtungen auf flexiblen Fliesen aufgebracht werden, die sich der Oberflächenkontur eines Untergrundes anpassen, ohne dass die Beschichtung nachteilig beeinflusst wird. Als Beschichtung können, wie bereits dargestellt, die unterschiedlichsten Schutzschichten aufgebracht werden, insbesondere Schutzschichten gegenüber aggressiven Chemikalien oder schmutzabweisende Beschichtungen.

Außerdem zeigt sich überraschenderweise, dass mit dem Verfahren der vorliegenden Erfindung dickere Beschichtungen aufgebracht werden können, wobei das Aufbringen in einem Mehrbeschichtungsverfahren vermieden wird. Dies zeigt sich insbesondere als Vorteil, wenn Kratzfestschichten auf polymeren Flächengebilden aufgebracht werden. Es ist außerdem überraschend, dass das beschichtete Substrat der vorliegenden Erfindung reversibel dehnbar und scheuerbar ist.

Die beschichteten Trägersubstrate der vorliegenden Erfindung und insbesondere die bevorzugten Fußbodenpaneele und/oder Furniere weisen eine kratzfeste und chemikalienresistente Oberfläche auf. Hierin sind sie beschicheten Trägersubstraten des Standes der Technik überlegen.

### Beispiele

### Erfindungsgemäßes Beispiel:

### Herstellung des beschichteten Substrats:

### Herstellung der Zusammensetzung:

In einem Rührbehälter werden 674,56g destilliertes Wasser, 271,48g Ethanol (96 %-ig) und 93,376g konzentrierte Salpetersäure vorgelegt. Zu dieser Mischung werden unter Rühren 11,97g Dolapix CE 64 (organisches Dispergier- und Verflüssigungsmittel (Polyelektrolyt) zur Verflüssigung von Oxidkeramik, Hersteller: Zschimmer & Schwarz GmbH & Co. KG, D-56112 Lahnstein) gegeben.

Nachfolgend werden zu der Mischung nacheinander jeweils 518,04g der Aluminiumoxide MZS 1 und MZS 3 der Martinswerke eindispergiert und die erhaltene Mischung wird 12 h nachgerührt.

Zu der Dispersion gibt man 16,66g Tetraethoxysilan, 16,66g Methyltriethoxysilan und 33,32g Glycidyloxipropyltrimethoxysilan und rührt 24h nach.

Die Dispersion wird mit 2,117g 25%-iger Ammoniak-Lösung versetzt und nachfolgend wird so viel der Dispersion auf ein PET-Vlies (Polyethylenterephthalat-Vlies, Freudenberg FK 22345) aufgebracht, dass nach Trocknung ein Beschichtungsgewicht von 220g/m² vorliegt. Die aufgebrachte Zusammensetzung wird zunächst bei Raumtemperatur getrocknet und dann in einem Ofen für 10s auf 220°C erhitzt. Dieser Verbund dient als Basismaterial für die folgende Beschichtung.

### Herstellung der zweiten Beschichtung:

298,95 g Glycidyloxypropyltriethoxysilan (GLYEO) werden mit 25,65 g einer 1,0 %-igen Salpetersäure in VE-Wasser gerührt, bis die Mischung klar ist. Anschließend werden 417,93 g 15 Gew. %-iger Dispersion von Aerosil R 812S in Ethanol, vergällt mit Methylethylketon, dazu gegeben. Nach einstündigem Rühren werden 257,47 g 3-Aminopropyltriethoxysilan (AMEO) langsam dazu gegeben. Dabei wird die Temperatur auf maximal 40 °C begrenzt. Nach der Zugabe von AMEO wird 18 Stunden bei Raumtemperatur nachgerührt.

Von der erhaltenen zweiten Beschichtungsmasse wird mit einem Rakel die Beschichtung auf das Basismaterial aufgebracht. Nachfolgend wird 30 Minuten bei 120°C getrocknet. Die trockene zweite Beschichtungsmasse wird gravimetrisch zu 30 g/m² bestimmt.

### Herstellung der Barriereschicht:

Die Rückseite des mit der Zusammensetzung und Beschichtung versehenen Vlieses wird mit einer Kunstharzdispersion (Wormalit VN 6035-22, Henkel KGaA) als Barriereschicht mit einem Rakel beschichtet. Die Schichtdicke betrug nach Trocknung bei Raumtemperatur bei ca. 8µm.

Das beschichtete PET-Vlies zeigt, wenn es gebogen wird, eine sehr hohe Flexibilität. Die aufgebrachten Schichten platzen nicht ab. Außerdem ist das beschichtete PET-Vlies sehr kratzfest, reversibel dehnbar und hoch scheuerbeständig nach DIN EN 259-1. Die erhaltene Oberfläche ist glatt, rissfrei und seidenglänzend. Außerdem zeigt sich, dass die Topfzeit der erfindungsgemäßen Beschichtungszusammensetzung deutlich verlängert ist. Folglich lässt sich die erfindungsgemäße Beschichtungszusammensetzung einfacher und effektiver verarbeiten.

### Herstellung des beschichteten Trägersubstrats:

### Trägersubstrat 1:

Auf eine Rohspanplatte (19 mm dick) als Trägersubstrat wird auf eine Seite ein Polyvinylacetat-Leim manuell aufgetragen. Auf diese Rohspanplatte wird das beschichtete PET-Vlies mit der Barriereschicht auf die aufgetragene Klebstoffschicht aufgeklebt. Dieser Verbund wird bei 60 °C für 10 Minuten mittels einer beheizbaren Presse erhitzt um das beschichtete Trägersubstrat 1 zu erhalten.

### Trägersubstrat 2:

Auf eine Rohspanplatte (19 mm dick) als Trägersubstrat wird auf eine Seite ein Harnstoffharzleim manuell aufgetragen (ca. 100g/m² trocken). Auf diese Rohspanplatte wird das beschichtete PET-Vlies mit der Barriereschicht auf die aufgetragene Klebstoffschicht aufgeklebt. Dieser Verbund wird bei 90 °C für 5 Minuten mittels einer beheizbaren Presse erhitzt um das beschichtete Trägersubstrat 2 zu erhalten.

### Herstellung des beschichteten Trägersubstrats als Kantenschutz:

### Kantenschutz 1:

Auf einer Kante einer Holzspanplatte von 19 mm Stärke wird ein Schmelzkleber enthaltend ein EVA-Copolymer (ca. 200 g/m²) aufgetragen. Auf diese beschichtete Kante wird das beschichtete PET-Vlies mit der Barriereschicht auf die aufgetragene Klebstoffschicht aufgebracht und die so erhaltene Kante bei einer Temperatur von 215 °C und unter erhöhtem Druck maschinell verklebt.

### Kantenschutz 2:

Auf eine Kante aus ABS Kunststoff wird ein Schmelzkleber aufgetragen. Auf diese beschichtete Kante wird das beschichtete PET-Vlies mit der Barriereschicht auf die aufgetragene Klebstoffschicht aufgebracht und die so erhaltene Kante bei einer Temperatur von 215 °C und unter erhöhtem Druck maschinell verklebt.

Die beschichteten Trägersubstrate und Kantenschutze der vorliegenden Erfindung sind sehr kratzfest, reversibel dehnbar und hoch scheuerbeständig nach DIN EN 259-1. Die erhaltenen Oberflächen sind glatt, rissfrei und glänzend. Die erhaltene Kante ist nicht aufgerissen.

## Patentansprüche

1. Verfahren zur Beschichtung von Substraten, umfassend die Schritte:
a) Bereitstellung eines Substrates,
b) Aufbringung einer Zusammensetzung auf einer ersten Seite des Substrates, wobei die Zusammensetzung eine anorganische Verbindung enthält und die anorganische Verbindung mindestens ein Metall und/oder Halbmetall ausgewählt aus der Gruppe Sc, Y, Ti, Zr, Nb, V, Cr, Mo, W, Mn, Fe, Co, B, Al, In, Tl, Si, Ge, Sn, Zn, Pb, Sb, Bi oder Mischungen derselben und mindestens ein Element ausgewählt aus der Gruppe Te, Se, S, O, Sb, As, P, N, C, Ga oder Mischungen derselben enthält,
c) Trocknen der in Schritt b) aufgebrachten Zusammensetzung,
d) Aufbringung mindestens einer Beschichtung auf der ersten Seite des Substrates, auf der in Schritt b) die Zusammensetzung aufgebracht wurde, wobei die Beschichtung ein Silan der allgemeinen Formel (Z¹)Si(OR)₃, wobei Z¹ R, OR oder Gly (Gly=3-Glycidyloxypropyl) ist und R ein Alkylrest mit 1 bis 18 Kohlenstoffatomen ist und alle R gleich oder unterschiedlich sein können, Oxidpartikel, ausgewählt aus den Oxiden von Ti, Si, Zr, Al, Y, Sn, Zn, Ce oder Mischungen derselben, ein Polymer und einen Initiator enthält, und
e) Trocknen der in Schritt d) aufgebrachten Beschichtung.
f) Aufbringen mindestens einer Barriereschicht auf einer zweiten Seite des Substrates, und
g) Optionales Aufbringen mindestens einer Schicht enthaltend mindestens einen Klebstoff auf der in Schritt f) aufgebrachten Barriereschicht

2. Das Verfahren gemäß Anspruch 1,
**dadurch gekennzeichnet,**
**dass** das Substrat in Schritt a) ein flexibles oder starres Substrat ist.

3. Das Verfahren gemäß mindestens einem der Ansprüche 1 oder 2,
**dadurch gekennzeichnet,**
**dass** anorganische Verbindung des Schrittes b) durch Hydrolisieren einer Vorstufe der anorganischen Verbindung enthaltend das Metall und/oder Halbmetall erhalten wird.

4. Das Verfahren gemäß Anspruch 3,
**dadurch gekennzeichnet,**
**dass** die Vorstufe der anorganische Verbindung ausgewählt ist aus Metallnitrat, Metallhalogenid, Metallcarbonat, Metallalkoholat, Halbmetallhalogenid, Halbmetallalkoholat oder Mischungen derselben.

5. Das Verfahren gemäß mindestens einem der Ansprüche 1 bis 4,
**dadurch gekennzeichnet,**
**dass** das Polymer der Beschichtung des Schrittes d) ausgewählt ist aus Polyamid, Polyester, Epoxidharze, Melamin-Formaldehyd-Kondensat, Urethan-Polyol-Harz oder Mischungen derselben.

6. Das Verfahren gemäß mindestens einem der Ansprüche 1 bis 5,
**dadurch gekennzeichnet,**
**dass** in Schritt d) auf das Substrat soviel der Beschichtung aufgebracht wird, dass nach Trocknung in Schritt e) auf dem Substrat eine Schicht der getrockneten Beschichtung mit einer Schichtdicke von 0,05 bis 10 µm vorhanden ist.

7. Das Verfahren gemäß mindestens einem der Ansprüche 1 bis 6,
**dadurch gekennzeichnet,**
**dass** vor dem Aufbringen der Beschichtung in Schritt b) und/oder d) mindestens eine weitere Beschichtung aufgebracht wird.

8. Das Verfahren gemäß mindestens einem der Ansprüche 1 bis 7,
**dadurch gekennzeichnet,**
**dass** die Barriereschicht in Schritt f) eine Schicht ist, die im wesentlichen keine Poren aufweist.

9. Das Verfahren gemäß mindestens einem der Ansprüche 1 bis 8,
**dadurch gekennzeichnet,**
**dass** die Barriereschicht in Schritt f) filmbildende Polymere enthält, die vorzugsweise ausgewählt sind aus Kunstharzdispersionen, Kunstharzemulsionen, Polyvinylalkohol, modifiziertem Polyvinylalkohol, Polyvinylacetat, modifiziertem Polyvinylacetat, Polymaleinsäureanhydrid, Polyvinylmethylether, Vinylmethylether-Maleinsäureanhydrid-Copolymerisat, Polyvinylbutylether, Vinylbutylether-Styrol-Copolymerisat, Polyurethan, Melaminformaldehydkondensat, Harnstoffmelaminkondensat oder Mischungen derselben.

10. Das Verfahren gemäß mindestens einem der Ansprüche 1 bis 9,
**dadurch gekennzeichnet,**
**dass** die in Schritt g) optional aufgebrachte Klebstoffschicht einen Klebstoff ausgewählt aus der Gruppe enthaltend Dispersionsklebstoffe, Lösungsmittelklebstofie, Stärkekleister, Kunstharzleime, Kaltleime, Heißsiegelklebstoffe, Schmelzklebstoffe, Montageleime, Tapetenkleister, physikalisch abbindende Klebstoffe, chemisch abbindende Klebstoffe, Einkomponentenklebstoffe, Mehrkomponentenklebstoffe, Zweikomponentenklebstoffe, Aminoplastklebstoffe, Phenoplastklebstoffe, Kontaktklebstoffe, Haftklebstoffe, Reaktionsklebstoffe, Plastisolklebstoffe, Leime, Harnstoffharzleime oder Mischungen derselben enthält.

11. Ein Verfahren zur Aufbringung des beschichteten Substrates gemäß mindestens einem der Ansprüche 1 bis 10 auf ein Trägersubstrat umfassend die Schritte:
a) Bereitstellung eines Trägersubstrates
b) Optionales Aufbringen mindestens einer Schicht enthaltend mindestens einen Klebstoff auf mindestens einer Seite des Trägersubstrates, und
c) Aufkleben des beschichteten Substrates gemäß mindestens einem der Ansprüche 1 bis 10 auf das Trägersubstrat, wobei die zweite Seite des beschichteten Substrates in Richtung des Trägersubstrates weist und/oder in Richtung der optional aufgebrachten Klebstoffschicht des Trägersubstrates weist.

12. Das Verfahren gemäß Anspruch 11,
**dadurch gekennzeichnet,**
**dass** das Trägersubstrat in Schritt a) ein flexibles oder starres Substrat ist.

13. Ein beschichtetes Substrat, erhältlich nach mindestens einem der Ansprüche 1 bis 10.

14. Ein beschichtetes Trägersubstrat, erhältlich nach mindestens einem der Ansprüche 11 und 12.

15. Das beschichtete Trägersubstrat gemäß Anspruch 14, wobei das beschichtete Trägersubstrat ein Fußbodenpaneel und/oder Furnier ist.

16. Verwendung des beschichteten Trägersubstrats gemäß Anspruch 14 als Fußbodenpaneel und/oder Furnier.

## Claims

1. Method for coating substrates, comprising the steps:
a) provision of a substrate,
b) application of a composition to a first side of the substrate, the composition containing an inorganic compound and the inorganic compound containing at least one metal and/or semimetal selected from the group consisting of Sc, Y, Ti, Zr, Nb, V, Cr, Mo, W, Mn, Fe, Co, B, Al, In, Tl, Si, Ge, Sn, Zn, Pb, Sb, Bi or mixtures thereof and at least one element selected from the group consisting of Te, Se, S, O, Sb, As, P, N, C, Ga or mixtures thereof,
c) drying of the composition applied in step b),
d) application of at least one coating to the first side of the substrate to which the composition is applied in step b), the coating containing a silane of the general formula (Z¹)Si(OR)₃, in which Z¹ is R, OR or Gly (Gly=3-glycidyloxypropyl) and R is an alkyl radical having 1 to 18 carbon atoms and all R may be identical or different, oxide particles selected from the oxides of Ti, Si, Zr, Al, Y, Sn, Zn, Ce or mixtures thereof, a polymer and an initiator, and
e) drying of the coating applied in step b),
f) application of at least one barrier layer to a second side of the substrate, and
g) optional application of at least one layer containing at least one adhesive to the barrier layer applied in step f).

2. Method according to Claim 1,
**characterized in that**
the substrate in step a) is a flexible or rigid substrate.

3. Method according to at least one of Claims 1 and 2,
**characterized in that**
the inorganic compound of step b) is obtained by hydrolysis of a precursor of the inorganic compound containing the metal and/or semimetal.

4. Method according to Claim 3,
**characterized in that**
the precursor of the inorganic compound is selected from metal nitrate, metal halide, metal carbonate, metal alcoholate, semimetal halide, semimetal alcoholate or mixtures thereof.

5. Method according to at least one of Claims 1 to 4,
**characterized in that**
the polymer of the coating of step d) is selected from polyamide, polyester, epoxy resins, melamine/formaldehyde condensate, urethane/polyol resin or mixtures thereof.

6. Method according to at least one of Claims 1 to 5,
**characterized in that,**
in step d), the coating is applied to the substrate in an amount such that, after drying in step e), a layer of the dried coating having a layer thickness of 0.05 to 10 µm is present on the substrate.

7. Method according to at least one of Claims 1 to 6,
**characterized in that,**
before application of the coating in step b) and/or d), at least one further coating is applied.

8. Method according to at least one of Claims 1 to 7,
**characterized in that**
the barrier layer in step f) is a layer which has substantially no pores.

9. Method according to at least one of Claims 1 to 8,
**characterized in that**
the barrier layer in step f) contains film-forming polymers which are preferably selected from synthetic resin dispersions, synthetic resin emulsions, polyvinyl alcohol, modified polyvinyl alcohol, polyvinyl acetate, modified polyvinyl acetate, polymaleic anhydride, polyvinyl methyl ether, vinyl methyl ether/maleic anhydride copolymer, polyvinyl butyl ether, vinyl butyl ether/styrene copolymer, polyurethane, melamine/formaldehyde condensate, urea/melamine condensate or mixtures thereof.

10. Method according to at least one of Claims 1 to 9,
**characterized in that**
the adhesive layer optionally applied in step g) contains an adhesive selected from the group consisting of dispersion adhesives, solvent adhesives, starch pastes, synthetic resin glues, cold glues, heat-seal adhesives, hotmelt adhesives, assembly glues, wallpaper pastes, physically setting adhesives, chemically setting adhesives, one-component adhesives, multicomponent adhesives, two-component adhesives, aminoplast adhesives, phenoplast adhesives, contact adhesives, pressure-sensitive adhesives, reaction adhesives, plastisol adhesives, glues, urea resin glues or mixtures thereof.

11. Method for applying the coated substrate according to at least one of Claims 1 to 10 to a support substrate, comprising the steps:
a) provision of a support substrate,
b) optional application of at least one layer containing at least one adhesive on at least one side of the support substrate and
c) adhesive bonding of the coated substrate according to at least one of claims 1 to 10 to the support substrate, the second side of the coated substrate pointing in the direction of the support substrate and/or pointing in the direction of the optionally applied adhesive layer of the support substrate.

12. Method according to Claim 11,
**characterized in that**
the support substrate in step a) is a flexible or rigid substrate.

13. Coated substrate obtainable according to at least one of Claims 1 to 10.

14. Coated support substrate obtainable according to at least one of Claims 11 and 12.

15. Coated support substrate according to Claim 14, the coated support substrate being a floor panel and/or veneer.

16. Use of the coated support substrate according to Claim 14 as a floor panel and/or veneer.

## Revendications

1. Procédé pour l'enduction de supports, comprenant les étapes suivantes :
a) fourniture d'un support,
b) application d'une composition sur une première face du support, la composition contenant un composé inorganique et le composé inorganique contenant un métal et/ou un métalloïde choisi dans l'ensemble constitué par Sc, Y, Ti, Zr, Nb, V, Cr, Mo, W, Mn, Fe, Co, B, Al, In, Tl, Si, Ge, Sn, Zn, Pb, Sb, Bi ou des mélanges de ceux-ci et au moins un élément choisi dans l'ensemble constitué par Te, Se, S, O, Sb, As, P, N, C, Ga ou des mélanges de ceux-ci,
c) séchage de la composition appliquée dans l'étape b),
d) application d'au moins un revêtement sur la première face du support, sur laquelle la composition a été appliquée dans l'étape b), le revêtement contenant un silane de formule générale (Z¹)Si(OR)₃, Z¹ étant R, OR ou Gly (Gly = 3-glycidyloxypropyle) et R étant un radical alkyle ayant de 1 à 18 atomes de carbone et tous les radicaux R pouvant être identiques ou différents, des particules d'un oxyde choisi parmi les oxydes de Ti, Si, Zr, Al, Y, Sn, Zn, Ce ou des mélanges de ceux-ci, un polymère et un amorceur, et
e) séchage du revêtement appliqué dans l'étape d),
f) application d'au moins une couche barrière sur une deuxième face du support, et
g) application facultative d'au moins une couche contenant au moins un adhésif, sur la couche barrière appliquée dans l'étape f).

2. Procédé selon la revendication 1, **caractérisé en ce que** le support dans l'étape a) est un support flexible ou rigide.

3. Procédé selon au moins l'une des revendications 1 ou 2, **caractérisé en ce que** le composé inorganique de l'étape b) est obtenu par hydrolyse d'un précurseur du composé inorganique contenant le métal et/ou le métalloïde.

4. Procédé selon la revendication 3, **caractérisé en ce que** le précurseur du composé inorganique est choisi parmi un nitrate métallique, un halogénure métallique, un carbonate métallique, un alcoolate métallique, un halogénure de métalloïde, un alcoolate de métalloïde ou des mélanges de ceux-ci.

5. Procédé selon au moins l'une des revendications 1 à 4, **caractérisé en ce que** le polymère du revêtement de l'étape d) est choisi parmi le polyamide, le polyester, les résines époxy, un produit de condensation mélamine-formaldéhyde, une résine uréthanne-polyol ou des mélanges de ceux-ci.

6. Procédé selon au moins l'une des revendications 1 à 5, **caractérisé en ce que** dans l'étape d) on applique sur le support une quantité suffisante du revêtement pour qu'après le séchage dans l'étape e) soit présente sur le support une couche du revêtement séché ayant une épaisseur de couche de 0,05 à 10 µm.

7. Procédé selon au moins l'une des revendications 1 à 6, **caractérisé en ce qu'**avant l'application du revêtement dans l'étape b) et/ou l'étape d) on applique au moins un autre revêtement.

8. Procédé selon au moins l'une des revendications 1 à 7, **caractérisé en ce que** la couche barrière dans l'étape f) est une couche qui ne présente pratiquement pas de pores.

9. Procédé selon au moins l'une des revendications 1 à 8, **caractérisé en ce que** la couche barrière dans l'étape f) contient des polymères filmogènes qui sont de préférence choisis parmi des dispersions de résines synthétiques, des émulsions de résines synthétiques, le poly(alcool vinylique) un poly(alcool vinylique) modifié, le poly(acétate de vinyle), un poly(acétate de vinyle) modifié, le poly(anhydride maléique), le poly(éther vinylméthylique), un copolymère éther vinylméthylique/anhydride maléique, le poly(éther vinylbutylique), un copolymère éther vinylbutylique/styrène, le polyuréthanne, un produit de condensation mélamine-formaldéhyde, un produit de condensation urée-mélamine ou des mélanges de ceux-ci.

10. Procédé selon au moins l'une des revendications 1 à 9, **caractérisé en ce que** la couche d'adhésif appliquée facultativement dans l'étape g) est choisie dans l'ensemble contenant des adhésifs en dispersion, des adhésifs à base de solvant, des colles d'amidon, des colles à base de résine synthétique, des colles durcissables à froid, des adhésifs pour thermosoudage, des adhésifs fusibles, des colles d'assemblage, des colles à tapisser, des adhésifs à prise physique, des adhésifs à prise chimique, des adhésifs monocomposants, des adhésifs multicomposants, des adhésifs bicomposants, des adhésifs aminoplaste, des adhésifs phénoplaste, des adhésifs de contact, des autoadhésifs, des adhésifs réactifs, des adhésifs Plastisol, des colles, des colles de résine synthétique ou des mélanges de ceux-ci.

11. Procédé pour l'application du support enduit, selon au moins l'une des revendications 1 à 10, sur un matériau de support, comprenant les étapes suivantes :
a) fourniture d'un support porteur,
b) application facultative d'au moins une couche contenant au moins un adhésif sur au moins une face du support porteur, et
c) collage du substrat enduit, selon au moins l'une quelconque des revendications 1 à 10, sur le support porteur, la deuxième face du support enduit étant dirigée vers le support porteur et/ou vers la couche d'adhésif appliquée facultativement du support porteur.

12. Procédé selon la revendication 11, **caractérisé en ce que** le support porteur dans l'étape a) est un support flexible ou rigide.

13. Support enduit pouvant être obtenu selon au moins l'une des revendications 1 à 10.

14. Support porteur enduit, pouvant être obtenu selon au moins l'une des revendications 11 et 12.

15. Support porteur enduit selon la revendication 14, le support porteur enduit étant un panneau de plancher et/ou un placage.

16. Utilisation du support porteur enduit selon la revendication 14, en tant que panneau de plancher et/ou placage.
